# FASCICULE DE BREVET EUROPEEN

(11) **EP 4 127 407 B1**
(45) Date de publication et mention de la délivrance du brevet: **21.05.2025**
(21) Numéro de dépôt: 21716517.4
(22) Date de dépôt: 22.03.2021
(51) Int. Cl.: F01D 5/14, B23P 15/04, F01D 5/28, F01D 9/04, F01D 9/06, F04D 29/38

(54) **AUBE DE STATOR DE TURBINE EN MATÉRIAU COMPOSITE À MATRICE CÉRAMIQUE**
TURBINENLEITSCHAUFEL AUS KERAMIKMATRIX-VERBUNDWERKSTOFF
CERAMIC MATRIX COMPOSITE TURBINE VANE

(30) Priorité: 27.03.2020 FR 2003081
(43) Date de publication de la demande: 08.02.2023
(73) Titulaire: Safran Ceramics, 33185 Le Haillan (FR)
(72) Inventeur: GIMAT, Matthieu, Arnaud, 77550 MOISSY-CRAMAYEL (FR); BOUILLON, Eric, 77550 MOISSY-CRAMAYEL (FR); CARLIN, Maxime, François, Roger, 77550 MOISSY-CRAMAYEL (FR)
(74) Mandataire: Cabinet Beau de Loménie
(86) Numéro de dépôt international: PCT/FR2021/050477
(87) Numéro de publication internationale: WO 2021/191543

(56) Documents cités:
- EP-A1- 2 975 215
- EP-A1- 3 459 732
- EP-A1- 3 498 971
- EP-A2- 1 803 901
- WO-A1-2015/069673
- US-A1- 2012 301 312
- US-A1- 2017 328 216

## Description

### Domaine Technique

L'invention concerne les aubes de turbine en matériau composite à matrice céramique (« matériau CMC »), et en particulier les aubes de stator de turbine, ainsi que leurs procédés de fabrication.

### Technique antérieure

Les distributeurs ou stators de turbine sont des pièces liées au carter d'un turboréacteur permettant de canaliser et d'orienter les gaz du flux primaire, c'est-à-dire du flux chaud. Un étage de turbine est constitué d'un aubage fixe appelé distributeur ou stator, suivi d'un aubage mobile ou rotor comprenant un disque de turbine et des aubes mobiles.

Les aubes des premiers étages de distributeurs sont généralement creuses pour pouvoir acheminer de l'air de refroidissement vers les rotors situés dans le moyeu. Une partie de cet air de refroidissement peut aussi être destinée au refroidissement du distributeur.

Pour réaliser ces pièces des parties chaudes des turbomachines, des matériaux composites à matrice céramique (matériaux « CMC ») ont été proposés, car ils possèdent des propriétés thermostructurales remarquables. En effet, ils ont des propriétés mécaniques les rendant aptes à constituer des éléments de structure et la capacité de conserver ces propriétés à des températures élevées. De plus, ces matériaux CMC ont une masse volumique bien inférieure à celle des matériaux métalliques habituellement utilisés pour les éléments des parties chaudes de turbomachines. Ils permettent ainsi de diminuer la masse de ces pièces tout en étant adaptés à une utilisation dans un environnement à température élevée.

Néanmoins, la fabrication de ces pièces creuses en matériau CMC peut présenter des inconvénients. Il peut être nécessaire d'utiliser un noyau lors de la fabrication de la pièce creuse afin de maintenir sa forme. Après consolidation de la pièce, il faut donc pouvoir contraindre la géométrie de la cavité de la pièce creuse pour en extraire le noyau. Des difficultés de fabrication supplémentaires sont aussi associées au fait de disposer de noyaux capables de tenir les températures associées à la gamme de fabrication et extractibles malgré une géométrie sans dépouille et/ou éliminables, par exemple par dégradation chimique, fusion, ou dissolution.

Le document US 2012/0301312 décrit une aube de stator de turbine avec les caractéristiques du préambule de la revendication 1.

Il serait souhaitable de disposer d'une aube de stator permettant de supporter les températures chaudes d'une turbomachine sans en augmenter le poids tout en s'affranchissant de l'utilisation d'un noyau lors de sa fabrication.

### Exposé de l'invention

L'invention concerne une aube de stator de turbine selon la revendication 1. L'aube en matériau composite à matrice céramique comprend au moins un profil d'aube creux et ayant un bord de fuite et un bord d'attaque, l'aube comprend également une première partie comprenant une face extrados du profil d'aube et une seconde partie distincte de la première partie comprenant une face intrados du profil d'aube, les première et deuxième parties étant liées entre elles par une interface de liaison présente au moins sur le bord de fuite ou le bord d'attaque du profil d'aube.

Le fait d'avoir une aube formée de deux parties distinctes permet de s'affranchir d'un noyau lors de sa fabrication. Les deux parties peuvent être fabriquées séparément sans utiliser de noyau avant d'être ensuite assemblées. Il est également possible d'obtenir l'aube par co-densification de préformes des deux parties consolidées au préalable afin qu'elles conservent leur forme. Ces deux possibilités de fabrication seront détaillées dans la suite. En plus de s'affranchir des inconvénients liés à l'utilisation d'un noyau lors de la fabrication, l'invention peut rendre possible l'introduction de fonctions sur une seule des deux parties sans impacter l'autre partie, comme des épaississements locaux sur une des parties, une variation du tissage entre les deux parties ou sur une même partie de l'aube, permettant ainsi de disposer d'aubes plus adaptées au besoin souhaité.

Dans un exemple de réalisation, l'aube comprend au moins un évent sur l'un au moins du bord de fuite et du bord d'attaque, ledit au moins évent s'étendant entre un espace interne du profil d'aube et une surface externe du profil d'aube.

Le fait de réaliser puis d'assembler les deux parties de l'aube sur une interface de liaison permet également d'ajouter des solutions de refroidissement pendant la fabrication de l'aube. Le refroidissement opéré grâce à l'évent est un refroidissement par film d'air, aussi appelé « film cooling » dans la littérature anglo-saxonne. L'évent peut être sur le bord de fuite, ce qui permet ainsi de refroidir le bord de fuite du profil d'aube. En variante ou en combinaison, l'évent peut être sur le bord d'attaque, ce qui permet de refroidir la face intrados ou extrados du profil d'aube.

L'interface de liaison comprend une zone de recouvrement entre les première et deuxième parties présente sur au moins une extrémité longitudinale du profil d'aube et destinée à être présente en dehors d'une veine d'écoulement d'un flux de gaz de la turbine.

Dans un exemple de réalisation, la zone de recouvrement est renforcée par au moins une liaison mécanique, par exemple une liaison boulonnée. Cela permet de renforcer l'interface de liaison entre les deux parties de l'aube sans perturber l'écoulement aérodynamique.

Selon l'invention, l'aube comprend également au moins une plateforme présente à une extrémité longitudinale du profil d'aube, la plateforme comprenant une première partie solidaire de la face extrados du profil d'aube et une seconde partie solidaire de la face intrados du profil d'aube, les première et deuxième parties de la plateforme étant liées entre elles sur au moins une portion de chevauchement appartenant à la zone de recouvrement.

Cela permet de renforcer l'interface de liaison entre les deux parties de l'aube.

Dans un exemple de réalisation, ladite au moins portion de chevauchement est renforcée par une liaison mécanique, par exemple une liaison boulonnée. Cela permet de renforcer l'interface de liaison entre les deux parties de l'aube sans perturber l'écoulement aérodynamique sur le profil d'aube.

Dans un exemple de réalisation, l'interface de liaison comprend une portion en saillie présente sur l'un au moins du bord de fuite ou du bord d'attaque.

L'invention vise également un procédé de fabrication selon la revendication 4 d'une aube telle que décrite précédemment, comprenant les étapes suivantes :
- fourniture d'une première préforme fibreuse destinée à former la face extrados du profil d'aube et d'une deuxième préforme fibreuse destinée à former la face intrados du profil d'aube ;
- densification des première et deuxième préformes fibreuses par une matrice céramique ; et
- assemblage des première et deuxième préformes fibreuses densifiées par réalisation d'une interface de liaison présente sur au moins le bord de fuite ou le bord d'attaque du profil d'aube.

Dans un exemple de réalisation, l'étape d'assemblage comprend la réalisation d'au moins un évent s'étendant entre un espace interne du profil d'aube et une surface externe du profil d'aube, sur l'un au moins du bord de fuite et du bord d'attaque.

L'interface de liaison réalisée lors de l'étape d'assemblage comprend une zone de recouvrement entre les première et deuxième préformes fibreuses densifiées présente sur au moins une extrémité longitudinale du profil d'aube et destinée à être en dehors d'une veine d'écoulement d'un flux de gaz de la turbine.

Selon l'invention, les première et deuxième préformes fibreuses définissent ensemble au moins une préforme de plateforme destinée à être présente à une extrémité longitudinale du profil d'aube, la préforme de plateforme comprenant une première partie solidaire de la première préforme fibreuse et une deuxième partie solidaire de la deuxième préforme fibreuse, et lors de l'assemblage, les première et deuxième parties de la préforme de plateforme étant liées entre elles sur au moins une portion de chevauchement appartenant à la zone de recouvrement.

Dans un exemple de réalisation, l'interface de liaison réalisée lors de l'étape d'assemblage comprend une portion en saillie présente sur l'un au moins du bord de fuite et du bord d'attaque du profil d'aube.

L'invention vise également un autre procédé de fabrication selon la revendication 7 d'une aube telle que décrite précédemment comprenant les étapes suivantes :
- fourniture d'une première préforme fibreuse destinée à former la partie extrados du profil d'aube et d'une deuxième préforme fibreuse destinée à former la partie intrados du profil d'aube ;
- consolidation des première et deuxième préformes fibreuses ;
- maintien en position des première et deuxième préformes fibreuses consolidées avec au moins une zone d'appui sur le bord de fuite ou le bord d'attaque du profil d'aube entre lesdites préformes fibreuses consolidées ; et
- co-densification des première et deuxième préformes fibreuses consolidées maintenues en positions avec une matrice céramique commune, l'interface de liaison étant formée par la matrice céramique commune sur la zone d'appui entre lesdites préformes fibreuses.

Dans un exemple de réalisation, le procédé comprend également une étape d'application locale d'un matériau fugitif sur la zone d'appui, avant l'étape de co-densification, et l'élimination du matériau fugitif, après l'étape de co-densification, de sorte à former au moins un évent s'étendant entre un espace interne du profil d'aube et une surface externe du profil d'aube, sur l'un au moins du bord d'attaque et du bord de fuite.

L'interface de liaison comprend une zone de recouvrement entre les première et deuxième préformes fibreuses densifiées présente sur au moins une extrémité longitudinale du profil d'aube et destinée à être en dehors d'une veine d'écoulement d'un flux de gaz de la turbine.

Selon l'invention, les première et deuxième préformes fibreuses définissent ensemble au moins une préforme de plateforme destinée à être présente à une extrémité longitudinale du profil d'aube, la préforme de plateforme comprenant une première partie solidaire de la première préforme fibreuse et une deuxième partie solidaire de la deuxième préforme fibreuse, et lors du maintien en position, les première et deuxième parties de la préforme de plateforme étant mises en contact sur au moins une portion de chevauchement appartenant à la zone de recouvrement.

Dans un exemple de réalisation, l'interface de liaison comprend une portion en saillie présente sur l'un au moins du bord de fuite et du bord d'attaque du profil d'aube. Dans un exemple de réalisation et quel que soit le procédé de fabrication mis en œuvre, les première et deuxième préformes fibreuses sont réalisées par tissage tridimensionnel.

L'aube de stator selon l'invention présente l'avantage de pouvoir être réalisée de différentes manières : assemblage et liaison des première et deuxième parties au préalable densifiées séparément ou assemblage et liaison des deux préformes fibreuses lors de la densification par une matrice céramique commune.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif.
[Fig. 1] La figure 1 représente, de manière schématique et partielle, une aube de stator de turbine en coupe transversale par rapport à la direction longitudinale selon un premier exemple de réalisation qui ne fait pas partie de l'objet des revendications.
[Fig. 2A] La figure 2A représente, de manière schématique et partielle, une vue en perspective d'un profil d'aube selon un deuxième exemple de réalisation qui ne fait pas partie de l'objet des revendications.
[Fig. 2B] La figure 2B représente, de manière schématique et partielle, une vue en perspective d'un profil d'aube selon un troisième exemple de réalisation qui ne fait pas partie de l'objet des revendications.
[Fig. 2C] La figure 2C représente, de manière schématique et partielle, une vue en perspective d'un profil d'aube selon un quatrième exemple de réalisation qui ne fait pas partie de l'objet des revendications.
[Fig. 3] La figure 3 représente, de manière schématique et partielle, une vue en perspective d'un profil d'aube selon un cinquième exemple de réalisation qui ne fait pas partie de l'objet des revendications.
[Fig. 4] La figure 4 représente, de manière schématique et partielle, une aube selon un sixième exemple de réalisation qui ne fait pas partie de l'objet des revendications.
[Fig. 5] La figure 5 représente, de manière schématique et partielle, une vue en perspective d'une aube selon un exemple de réalisation de l'invention.

### Description des modes de réalisation

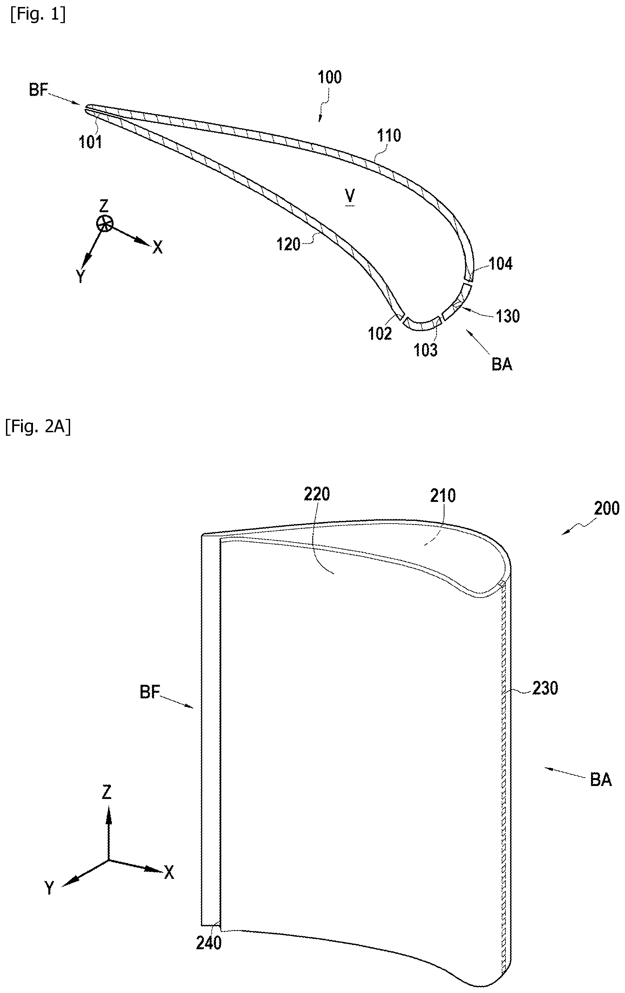

Sur les figures 1 à 2C, l'interface de liaison 130 et 230 présente entre les première 110, 210 et deuxième 120, 220 parties de l'aube a été exagérée afin d'en améliorer la visibilité.

La figure 1 est une vue en coupe du profil d'aube d'une aube de stator selon un premier mode de réalisation qui ne fait pas partie de l'objet des revendications. La coupe est prise transversalement à la direction longitudinale Z de l'aube (plan (XY)).

L'aube est réalisée en matériau composite à céramique et comprend un profil d'aube 100 creux. Le profil d'aube 100 a un bord de fuite BF et un bord d'attaque BA. L'aube comprend une première partie 110 formant la face extrados du profil d'aube 100 et une seconde partie 120 formant la face intrados du profil d'aube 100. Les deux parties 110 et 120 de l'aube sont liées entre elles par une interface de liaison 130 présente sur le bord d'attaque BA dans l'exemple illustré. Les deux parties 110 et 120 de l'aube sont solidarisées sur l'interface de liaison 130 afin de former le profil d'aube 100.

Plus généralement, l'interface de liaison 130 est présente sur le bord de fuite BF ou sur le bord d'attaque BA ou à la fois sur le bord d'attaque BA et sur le bord de fuite BF.

Le volume interne V du profil d'aube 100 s'étend entre ses deux extrémités longitudinales et forme un canal de circulation d'un flux d'air de refroidissement. Afin d'acheminer l'air de refroidissement vers la surface externe du profil d'aube 100 ou vers les pièces chaudes environnantes, l'aube peut comprendre des évents 101, 102, 103 et 104. Par exemple, l'évent 101 présent sur le bord de fuite BF permet de refroidir le bord de fuite BF, l'évent 102 présent sur le bord d'attaque BA du côté de la face intrados permet de refroidir la face intrados du profil d'aube 100 et les évents 103 et 104 présents sur le bord d'attaque BA du côté de la face extrados pour 104 et du côté de la face intrados pour 103 permettent de refroidir la face extrados du profil d'aube 100. Les évents 101 à 104 mettent en communication le volume interne V avec le volume extérieur du profil d'aube afin de ménager des passages pour l'air de refroidissement. On a représenté un exemple où plusieurs évents sont présents mais on ne sort bien entendu pas du cadre de l'invention lorsqu'un unique évent est présent.

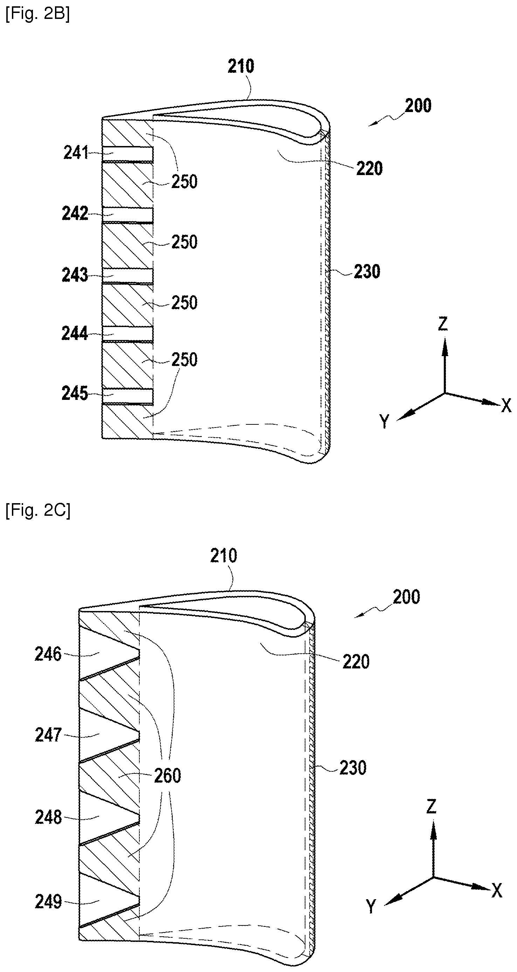

Les figures 2A, 2B et 2C représentent différents agencements possibles pour les évents réalisés sur une aube de stator.

Sur la figure 2A, l'évent 240 est présent sur toute la hauteur du profil d'aube 200 sur le bord de fuite BF. L'interface de liaison 230 entre les deux parties 210 et 220 de l'aube ne sera donc présente que sur le bord d'attaque BA.

Selon un autre exemple, les évents 241 à 249 sont présents sur toute la hauteur du profil d'aube 200, mais sont séparés par des zones de liaison 250 et 260 entre les deux parties 210 et 220. Les évents 241 à 245 peuvent être de section sensiblement constante sur leur longueur et par exemple être de forme cylindrique (voir figure 2B). En variante, la section des évents peut varier sur leur longueur, cette section pouvant augmenter lorsque l'on se déplace en direction du volume extérieur du profil d'aube comme illustré à la figure 2C. Dans l'exemple de la figure 2C, les évents 246 à 249 ont une forme conique. Dans les exemples illustrés aux figures 2B et 2C, les évents 241 à 249 sont répartis uniformément le long de la direction longitudinale Z. On ne sort néanmoins pas du cadre de l'invention si la répartition des évents le long de la direction longitudinale Z n'est pas régulière.

Plus généralement, la forme et l'emplacement des évents sont adaptés sur les bords de fuite ou d'attaque du profil d'aube en fonction des besoins en refroidissement de l'aube et de ses éléments environnants.

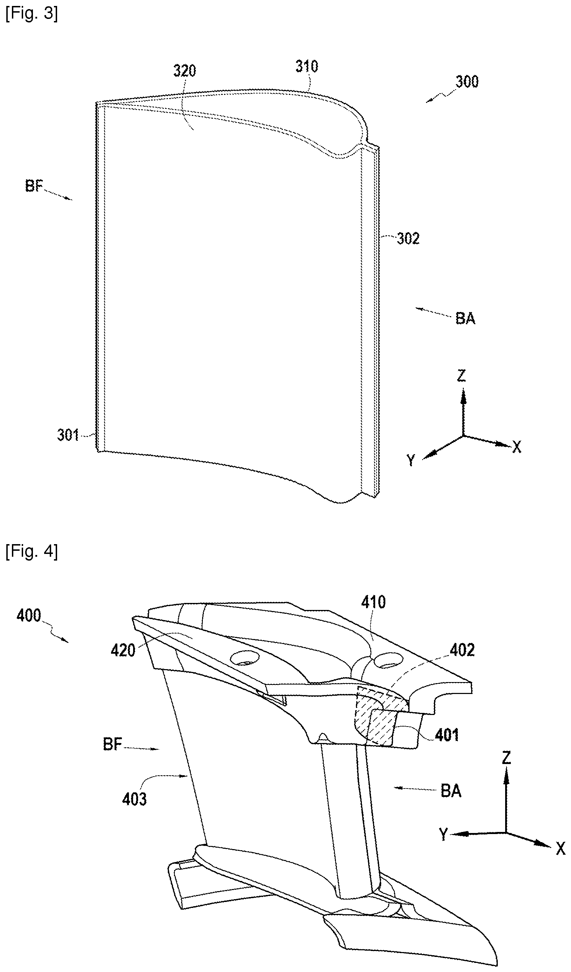

Afin de renforcer la liaison entre les deux parties 110, 210 et 120, 220 de l'aube, il est possible de modifier l'interface de liaison 130, 230 entre ces deux parties. Les figures 3, 4 et 5 présentent quelques exemples d'interface de liaison entre les deux parties de l'aube.

Sur la figure 3, l'interface de liaison 301, 302 comprend deux portions en saillie présentes sur le bord de fuite BF et sur le bord d'attaque BA du profil d'aube 300. Ce type de portion en saillie permet de renforcer l'interface de liaison 301, 302 entre les deux parties 310 et 320 de l'aube.

Il est également possible d'ajouter des évents sur au moins l'une des deux portions en saillie 301 et 302. Il est également possible d'avoir une portion en saillie sur l'un des bords de fuite BF ou d'attaque BA du profil d'aube 300 et d'avoir sur l'autre bord, un évent s'étendant sur toute la hauteur du profil d'aube 300.

Sur la figure 4, l'interface de liaison 401 comprend une zone de recouvrement 402 entre les première 410 et deuxième 420 parties de l'aube présente sur l'extrémité longitudinale externe du profil d'aube 400 hors d'une veine d'écoulement 403 du flux de gaz. Dans cet exemple, la zone de recouvrement 402 est sur le bord d'attaque BA du profil d'aube 400, mais il est également possible de retrouver le même type de zone de recouvrement 402 sur le bord de fuite BF.

De plus, la zone de recouvrement 402 représentée sur la figure 4 est disposée sur l'extrémité longitudinale externe du profil d'aube 400, mais elle peut également être disposée sur l'extrémité longitudinale interne du profil d'aube 400.

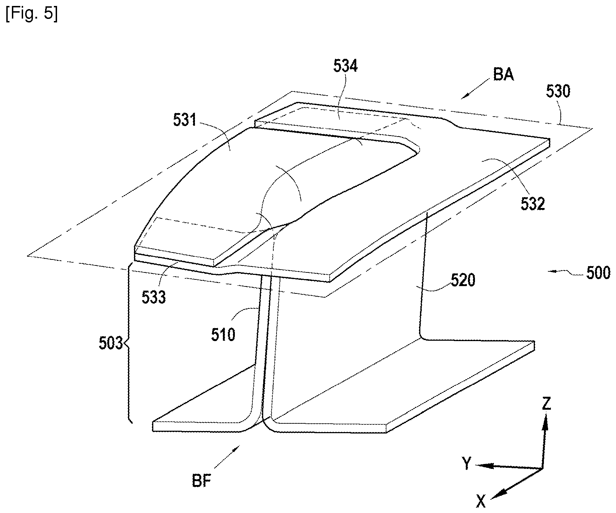

L'aube représentée en figure 5 comprend un profil d'aube 500 et deux parties 510 et 520 assemblées entre elles pour former une face extrados et une face intrados du profil d'aube. Elle comprend également une plateforme externe 530 présente à une extrémité longitudinale du profil d'aube 500. La plateforme externe 530 délimite la veine d'écoulement 503. Cette plateforme 530 comprend, selon un exemple de réalisation de l'invention, une première partie 531 solidaire de la première partie 510 de l'aube et une seconde partie 532 solidaire de la deuxième partie 520 de l'aube. Les deux parties 531 et 532 de la plateforme 530 sont liées entre elles sur deux portions de chevauchement 533 et 534 dans l'exemple illustré. Les parties 531 et 532 se recouvrent sur les portions de chevauchement 533 et 534.

La figure 5 ne représente que la plateforme 530 externe de l'aube. Cependant, l'aube peut comprendre, sur l'autre extrémité longitudinale du profil d'aube 500, une plateforme interne, opposée à la plateforme externe 530, comprenant deux parties telles que définies pour la plateforme externe 530.

Les figures 4 et 5 décrivent ainsi un renforcement de la liaison entre les deux parties 410, 51) et 420, 520 de l'aube hors d'une veine d'écoulement 403, 503 du gaz dans la turbine. L'avantage de ce type de renforcement hors veine est de pouvoir ajouter des liaisons mécaniques, par exemple des liaisons boulonnées, sur ces interfaces de liaison pour la renforcer sans modifier les propriétés aérodynamiques du profil d'aube 400, 500.

Un premier exemple de procédé de fabrication d'une aube selon l'invention est décrit ci-dessous.

Dans ce premier exemple, le procédé comprend une première étape de fourniture de deux préformes fibreuses. La première préforme fibreuse est destinée à former la face extrados du profil d'aube 100 et est donc destinée à former la première partie 110 de l'aube représentée sur la figure 1. La seconde préforme fibreuse est destinée à former la face intrados du profil d'aube 100 et est donc destinée à former la deuxième partie 120 de l'aube représentée sur la figure 1.

Dans une seconde étape, les deux préformes fibreuses sont densifiées par une matrice céramique. Les matrices céramiques des préformes fibreuses peuvent être réalisées en tout ou partie par infiltration chimique en phase vapeur, ou en tout ou partie par voie liquide. La technique de voie liquide peut être une infiltration à l'état fondu (« Melt Infiltration ») ou une technique d'imprégnation et de pyrolyse de polymère (« Polymer Impregnation Pyrolysis »). La formation d'une matrice céramique par les techniques évoquées est connue en soi. On pourra également utiliser une combinaison de ces techniques pour former les matrices. Les matrices peuvent, par exemple, comporter du carbure de silicium.

Enfin dans une troisième étape, les première et deuxième préformes densifiées sont assemblées grâce à la réalisation d'une interface de liaison présente sur au moins le bord de fuite ou le bord d'attaque du profil d'aube.

L'interface de liaison peut par exemple être réalisée par collage grâce à l'application d'un adhésif sur les deux préformes fibreuses densifiées sur le bord de fuite ou le bord d'attaque ou par tout autre moyen connu.

Selon un autre exemple, l'interface de liaison est formée par l'ajout de joint entre les deux préformes fibreuses densifiées.

Selon un exemple de réalisation, l'étape d'assemblage comprend la réalisation d'au moins un évent s'étendant entre un espace interne du profil d'aube et une surface externe du profil d'aube sur le bord de fuite ou le bord d'attaque du profil d'aube. Pour réaliser ces évents, la forme des préformes fibreuses peut être adaptée.

On peut également créer les évents en ne liant pas certaines zones des bords d'attaque et de fuite du profil d'aube. On peut également utiliser des outils de maintien durant l'assemblage pour contraindre les dimensions de l'évent.

Pour renforcer la liaison entre les deux préformes fibreuses, l'interface de liaison comprend une zone de recouvrement entre les première et deuxième préformes fibreuses densifiées présente sur au moins une extrémité longitudinale du profil d'aube et destinée à être en dehors d'une veine d'écoulement d'un flux de gaz de la turbine.

Pour réaliser cette zone de recouvrement, on adapte la forme des préformes fibreuses lors de leur réalisation afin de former la taille de zone de recouvrement désirée. Lors de l'assemblage, les deux préformes densifiées sont liées sur la zone de recouvrement de la même manière que sur l'interface de liaison.

Il est également possible d'ajouter une liaison mécanique à cette zone de recouvrement pour renforcer la liaison entre les deux préformes fibreuses.

Selon l'invention, permettant également de renforcer la liaison entre les deux préformes fibreuses, les deux préformes définissent ensemble au moins une préforme de plateforme destinée à être présente à une extrémité longitudinale du profil d'aube. La préforme de plateforme peut être réalisée en même temps que les première et deuxième préformes fibreuses. Elle comprend une première partie solidaire de la première préforme fibreuse et une seconde partie solidaire de la deuxième préforme fibreuse. Lors de l'assemblage des préformes fibreuses densifiées, les deux parties de la plateforme sont liées entre elles sur au moins une portion de chevauchement appartenant à la zone de recouvrement en dehors de la veine d'écoulement d'un flux de gaz de la turbine.

Selon un exemple de réalisation de l'invention, pour renforcer la liaison entre les deux parties de la préforme de plateforme, une liaison mécanique, par exemple une liaison boulonnée, est ajoutée sur la portion de chevauchement. Cela permet de consolider la liaison entre les deux préformes fibreuses sans modifier le profil aérodynamique de l'aube. Cela permet également de placer un grand nombre d'évents sur les bords de fuite et d'attaque du profil d'aube pour améliorer la capacité de refroidissement de l'aube tout en conservant une structure d'aube robuste.

Selon un autre exemple de réalisation, pour renforcer la liaison entre les deux préformes fibreuses, l'interface de liaison peut comprendre une portion en saillie présente sur le bord de fuite et/ou le bord d'attaque du profil d'aube. Cette portion en saillie peut être réalisée lors de la réalisation des deux préformes fibreuses durant laquelle, les bords de fuite et/ou les bords d'attaque des deux préformes fibreuses sont prolongés axialement (selon la direction X sur la figure 3). Lors de l'assemblage des deux préformes, les prolongements des bords de fuite et/ou d'attaque des deux préformes fibreuses densifiées sont liées entre eux pour former des portions en saillie.

La liaison des prolongements des préformes fibreuses peut être réalisée de la même manière que l'interface de liaison entre les deux parties de l'aube.

Un second procédé de fabrication d'une aube selon l'invention est décrit ci-dessous.

Dans ce second procédé de fabrication, la première étape consiste à fournir une première préforme fibreuse destinée à former la partie extrados du profil d'aube 100, donc la première partie 110 de l'aube représentée en figure 1, et une deuxième préforme fibreuse destinée à former la partie intrados du profil d'aube 100, donc la deuxième partie 120 de l'aube représentée en figure 1.

La seconde étape consiste à consolider les deux préformes fibreuses afin qu'elles soient autoporteuses. Cette étape de consolidation avant l'assemblage permet de s'affranchir de la présence d'un noyau pour le maintien et l'assemblage des deux préformes fibreuses. La consolidation consiste à remplir partiellement la porosité des deux préformes fibreuses par une phase de matrice de consolidation leur permettant de conserver leur forme sans assistance d'un outillage de maintien.

Dans une troisième étape, les première et deuxième préformes fibreuses consolidées sont maintenues en position et positionnées en appui l'une sur l'autre sur au moins une zone d'appui présente sur le bord de fuite ou sur le bord d'attaque du profil d'aube. Il est également possible d'avoir plusieurs zones d'appui sur le bord de fuite et/ou sur le bord d'attaque.

Puis dans une quatrième étape, les deux préformes fibreuses consolidées maintenues en position sont co-densifiées avec une matrice céramique commune. Une interface de liaison se forme également par la matrice céramique commune sur la zone d'appui (ou les zones d'appui) entre lesdites deux préformes fibreuses.

Les techniques de densification précédemment décrites pour le premier procédé peuvent également être utilisées pour l'étape de co-densification du second procédé.

Selon un exemple de réalisation de l'invention, ce second procédé peut également comprendre une étape d'application locale d'un matériau fugitif sur la zone d'appui entre les deux préformes fibreuses consolidées avant l'étape de co-densification, et une étape d'élimination du matériau fugitif après la co-densification. Ces étapes supplémentaires permettent de créer au moins un évent s'étendant entre un espace interne et une surface externe du profil d'aube sur le bord de fuite ou le bord d'attaque du profil d'aube.

L'application d'un matériau fugitif, tel un matériau antimouillant, tel que du vernis réfractaire (au nitrure de bore), ou un matériau fusible sur une surface permet d'éviter la densification par la matrice commune de cette surface. Elle permet donc de ne pas lier les deux préformes fibreuses consolidées maintenues en position sur cette surface, et ainsi de créer un passage entre l'intérieur du profil d'aube et l'extérieur du profil d'aube pour, par exemple, évacuer un flux d'air de refroidissement.

Pour renforcer la liaison entre les deux préformes fibreuses, l'interface de liaison comprend une zone de recouvrement entre les deux préformes fibreuses densifiées présente sur au moins une extrémité longitudinale du profil d'aube et destinée à être en dehors d'une veine d'écoulement d'un flux de gaz de la turbine. Pour former cette zone de recouvrement, la forme des deux préformes fibreuses fournies est adaptée, et la liaison entre les deux préformes sur cette zone est faite par la matrice céramique commune.

Il est également possible d'ajouter une liaison mécanique sur la zone de recouvrement, par exemple une liaison boulonnée, pour renforcer la liaison entre les deux préformes fibreuses.

Selon l'invention, afin de renforcer la liaison entre les deux préformes, les deux préformes fibreuses définissent ensemble au moins une préforme de plateforme destinée à être présente à une extrémité longitudinale du profil d'aube. La préforme de plateforme comprend une première partie solidaire de la première préforme fibreuse et une seconde partie solidaire de la deuxième préforme fibreuse. Lors du maintien en position des deux préformes fibreuses consolidées, les deux parties de la préforme de plateforme sont mises en contact sur une portion de chevauchement appartenant à la zone de recouvrement. Les deux parties de la préforme de plateforme sont liées sur la zone de recouvrement par la matrice céramique commune. On peut également y ajouter un moyen de renfort pour améliorer la liaison sur cette zone.

Selon un exemple de réalisation, pour renforcer la liaison entre les parties de la préforme de plateforme, une liaison mécanique, par exemple une liaison boulonnée, est ajoutée sur la portion de chevauchement. Cela permet de consolider la liaison entre les deux préformes fibreuses sans modifier le profil aérodynamique de l'aube.

Selon un autre exemple de réalisation du procédé selon l'invention, pour renforcer la liaison entre les deux préformes fibreuses, l'interface de liaison peut comprendre une portion en saillie présente sur l'un au moins du bord de fuite ou du bord d'attaque du profil d'aube. Cette portion en saillie est issue du prolongement axial (selon la direction X de la figure 3) des deux préformes fibreuses sur leur bord de fuite et/ou d'attaque lors de leur réalisation, et de la liaison par la matrice céramique commune des prolongements des deux préformes lors de la co-densification.

Que ce soit pour le premier ou le second procédé de fabrication, les première 110 et deuxième 120 préformes fibreuses peuvent être réalisées par tissage tridimensionnel. Les fils utilisés pour former les préformes peuvent être en céramique, notamment en carbure de silicium, ou en carbone. Les préformes peuvent, par exemple, être mises en forme dans un outillage de conformation.

Selon un autre exemple de réalisation de l'invention, les première et deuxième préformes, quel que soit le procédé, peuvent être obtenues par drapage d'une pluralité de nappes fibreuses unidirectionnelles ou de strates de tissu bidimensionnel ou tridimensionnel.

Que ce soit pour le premier ou le second procédé de fabrication, les première et deuxième préformes fibreuses peuvent comprendre des « encoches » dans lesquelles on peut placer une cale ou un autre outil de maintien pour éviter de déposer de la matière sur ces encoches et ainsi former des évents sur le bord de fuite et/ou d'attaque. L'avantage d'utiliser des cales ou tout autre outil de maintien est de pouvoir calibrer la taille des évents.

## Revendications

1. Aube de stator de turbine en matériau composite à matrice céramique comprenant au moins un profil d'aube (100, 200, 300, 400, 500) creux et ayant un bord de fuite (BF) et un bord d'attaque (BA), l'aube comprend également une première partie (110, 210, 310, 410, 510) comprenant une face extrados du profil d'aube et une seconde partie (120, 220, 320, 420, 520) distincte de la première partie comprenant une face intrados du profil d'aube, les première et deuxième parties étant liées entre elles par une interface de liaison (130, 230, 250, 260, 301, 302, 401) présente au moins sur le bord de fuite ou le bord d'attaque du profil d'aube, l'interface de liaison comprenant une zone de recouvrement (402) entre les première (410) et deuxième (420) parties présente sur au moins une extrémité longitudinale du profil d'aube (400) et destinée à être présente en dehors d'une veine d'écoulement (403) d'un flux de gaz de la turbine, l'aube comprenant également au moins une plateforme (530) présente à une extrémité longitudinale du profil d'aube (500) qui comprend une première partie (531) solidaire de la face extrados (510) du profil d'aube et une seconde partie (532) solidaire de la face intrados (520) du profil d'aube,
**caractérisée en ce que** les première et seconde parties de la plateforme sont liées entre elles sur au moins une portion de chevauchement (533, 534) appartenant à la zone de recouvrement.

2. Aube de stator de turbine selon la revendication 1 comprenant au moins un évent (101, 102, 103, 104, 240 à 249) sur l'un au moins du bord de fuite et du bord d'attaque, ledit au moins évent s'étendant entre un espace interne (V) du profil d'aube et une surface externe du profil d'aube.

3. Aube de stator de turbine selon l'une quelconque des revendications 1 ou 2, dans laquelle l'interface de liaison (301, 302) comprend une portion en saillie présente sur l'un au moins du bord de fuite et du bord d'attaque du profil d'aube (300).

4. Procédé de fabrication d'une aube de stator de turbine selon l'une des revendications 1 à 3, comprenant les étapes suivantes :
- fourniture d'une première préforme fibreuse destinée à former la face extrados (110, 210, 310, 410, 510) du profil d'aube (100, 200, 300, 400, 500) et d'une deuxième préforme fibreuse destinée à former la face intrados (120, 220, 320, 420, 520) du profil d'aube, les première (510) et deuxième (520) préformes fibreuses définissant ensemble au moins une préforme de plateforme (530) destinée à être présente à une extrémité longitudinale du profil d'aube (500), la préforme de plateforme comprenant une première partie (531) solidaire de la première préforme fibreuse et une deuxième partie (532) solidaire de la deuxième préforme fibreuse ;
- densification des première et deuxième préformes fibreuses par une matrice céramique ; et
- assemblage des première et deuxième préformes fibreuses densifiées par réalisation d'une interface de liaison (130, 230, 250, 260, 301, 302, 401) présente sur au moins le bord de fuite (BF) ou le bord d'attaque (BA) du profil d'aube, l'interface de liaison (401) comprenant une zone de recouvrement (402) entre les première (410) et deuxième (420) préformes fibreuses densifiées présente sur au moins une extrémité longitudinale du profil d'aube (400) et destinée à être en dehors d'une veine d'écoulement (403) d'un flux de gaz de la turbine, et les première et deuxième parties de la préforme de plateforme étant liées entre elles sur au moins une portion de chevauchement (533, 534) appartenant à la zone de recouvrement.

5. Procédé de fabrication d'une aube selon la revendication 4 dans lequel l'étape d'assemblage comprend la réalisation d'au moins un évent (101, 102, 103, 104, 240 à 249) s'étendant entre un espace interne (V) du profil d'aube et une surface externe du profil d'aube, sur l'un au moins du bord de fuite et du bord d'attaque.

6. Procédé de fabrication d'une aube selon l'une quelconque des revendications 4 ou 5 dans lequel l'interface de liaison (301, 302) comprend une portion en saillie présente sur l'un au moins du bord de fuite et du bord d'attaque du profil d'aube (300).

7. Procédé de fabrication d'une aube de stator de turbine selon l'une des revendications 1 à 3, comprenant les étapes suivantes :
- fourniture d'une première préforme fibreuse destinée à former la partie extrados (110, 210, 310, 410, 510) du profil d'aube (100, 200, 300, 400, 500) et d'une deuxième préforme fibreuse destinée à former la partie intrados (120, 220, 320, 420, 520) du profil d'aube, les première (510) et deuxième (520) préformes fibreuses définissant ensemble au moins une préforme de plateforme (530) destinée à être présente sur une extrémité longitudinale du profil d'aube (500), la préforme de plateforme comprenant une première partie (531) solidaire de la première préforme fibreuse et une deuxième partie (532) solidaire de la deuxième préforme fibreuse ;
- consolidation des première et deuxième préformes fibreuses ;
- maintien en position des première et deuxième préformes fibreuses consolidées avec au moins une zone d'appui sur le bord de fuite (BF) ou le bord d'attaque (BA) du profil d'aube entre lesdites préformes fibreuses consolidées ; et
- co-densification des première et deuxième préformes fibreuses consolidées maintenues en position avec une matrice céramique commune, l'interface de liaison (130, 230, 250, 260, 301, 302, 401) étant formée par la matrice céramique commune sur la zone d'appui entre lesdites préformes fibreuses, l'interface de liaison (401) comprenant une zone de recouvrement (402) entre les première (410) et deuxième (420) préformes fibreuses densifiées présente sur au moins une extrémité longitudinale du profil d'aube (400) et destinée à être en dehors d'une veine d'écoulement (403) d'un flux de gaz de la turbine, et lors du maintien en position, les première et deuxième parties de la préforme de plateforme étant mises en contact sur au moins une portion de chevauchement (533, 534) appartenant à la zone de recouvrement .

8. Procédé de fabrication d'une aube selon la revendication 7 comprenant également une étape d'application locale d'un matériau fugitif sur la zone d'appui, avant l'étape de co-densification, et l'élimination du matériau fugitif, après l'étape de co-densification, de sorte à former au moins un évent (101, 102, 103, 104, 240 à 249) s'étendant entre un espace interne (V) du profil d'aube et une surface externe du profil d'aube, sur l'un au moins du bord d'attaque et du bord de fuite.

9. Procédé de fabrication d'une aube selon l'une quelconque des revendications 7 ou 8 dans lequel l'interface de liaison (301, 302) comprend une portion en saillie présente sur l'un au moins du bord de fuite et du bord d'attaque du profil d'aube (300).

10. Procédé de fabrication d'une aube selon l'une quelconque des revendications 4 à 9 dans lequel les première et deuxième préformes fibreuses sont réalisées par tissage tridimensionnel.

## Patentansprüche

1. Turbinenleitschaufel aus Verbundwerkstoff mit keramischer Matrix, umfassend mindestens ein hohles Schaufelprofil (100, 200, 300, 400, 500) und eine Abströmkante (BF) und eine Anströmkante (BA) aufweist, die Schaufel auch umfassend einen ersten Teil (110, 210, 310, 410, 510), der eine Oberseite des Schaufelprofils umfasst, und einen zweiten Teil (120, 220, 320, 420, 520), der sich von dem ersten Teil unterscheidet und eine Unterseite des Schaufelprofils umfasst, wobei der erste und der zweite Teil durch eine Verbindungsschnittstelle (130, 230, 250, 260, 301, 302, 401) miteinander verbunden sind, die zumindest an der Abströmkante oder der Anströmkante des Schaufelprofils vorhanden ist, die Verbindungsschnittstelle einen Abdeckungsbereich (402) zwischen dem ersten (410) und dem zweiten (420) Teil umfasst, der an mindestens einem Längsende des Schaufelprofils (400) vorhanden ist und dazu bestimmt ist, außerhalb eines Strömungskanals (403) eines Gasstroms der Turbine vorhanden zu sein, die Schaufel auch umfassend mindestens eine Plattform (530), die an einem Längsende des Schaufelprofils (500) vorhanden ist und die einen ersten Teil (531), der fest mit der Oberseite (510) des Schaufelprofils verbunden ist, und einen zweiten Teil (532), der fest mit der Unterseite (520) des Schaufelprofils verbunden ist, umfasst, **dadurch gekennzeichnet, dass** der erste und der zweite Teil der Plattform an mindestens einem überlappenden Abschnitt (533, 534), der zu dem Abdeckungsbereich gehört, miteinander verbunden sind.

2. Turbinenleitschaufel nach Anspruch 1, mindestens umfassend eine Entlüftung (101, 102, 103, 104, 240 bis 249) an mindestens einer von der Abströmkante und der Anströmkante, wobei sich die mindestens eine Entlüftung zwischen einem Innenraum (V) des Schaufelprofils und einer Außenfläche des Schaufelprofils erstreckt.

3. Turbinenleitschaufel nach einem der Ansprüche 1 oder 2, wobei die Verbindungsschnittstelle (301, 302) einen hervorstehenden Abschnitt umfasst, der an mindestens einer der Abströmkante und der Anströmkante des Schaufelprofils (300) vorhanden ist.

4. Verfahren zur Herstellung einer Turbinenleitschaufel nach einem der Ansprüche 1 bis 3, umfassend die folgenden Schritte:
- Bereitstellen eines ersten Faservorformlings zum Bilden der Oberseite (110, 210, 310, 410, 510) des Schaufelprofils (100, 200, 300, 400, 500) und eines zweiten Faservorformlings zum Bilden der Unterseite (120, 220, 320, 420, 520) des Schaufelprofils, wobei der erste (510) und der zweite (520) Faservorformling zusammen mindestens einen Plattformvorformling (530) definieren, der dazu bestimmt ist, an einem Längsende des Schaufelprofils (500) vorhanden zu sein, der Plattformvorformling umfassend einen ersten Teil (531), der fest mit dem ersten Faservorformling verbunden ist, und einen zweiten Teil (532), der fest mit dem zweiten Faservorformling verbunden ist;
- Verdichten des ersten und des zweiten Faservorformling durch eine Keramikmatrix; und
- Zusammenfügen des ersten und des zweiten verdichteten Faservorformlings durch Herstellen einer Verbindungsschnittstelle (130, 230, 250, 260, 301, 302, 401), die zumindest an der Abströmkante (BF) oder der Anströmkante (BA) des Schaufelprofils vorhanden ist, die Verbindungsschnittstelle (401) umfassend einen Abdeckungsbereich (402) zwischen dem ersten (410) und dem zweiten (420) verdichteten Faservorformling, der an mindestens einem Längsende des Schaufelprofils (400) vorhanden ist und dazu bestimmt ist, außerhalb eines Strömungskanals (403) eines Gasstroms der Turbine zu sein, und wobei der erste und der zweite Teil des Plattformvorformlings an mindestens einem überlappenden Abschnitt (533, 534), der zu dem Abdeckungsbereich gehört, miteinander verbunden sind.

5. Verfahren zur Herstellung einer Schaufel nach Anspruch 4, wobei der Montageschritt die Herstellung mindestens einer Entlüftung (101, 102, 103, 104, 240 bis 249) umfasst, die sich zwischen einem Innenraum (V) des Schaufelprofils und einer Außenfläche des Schaufelprofils an mindestens einer von der Abströmkante und der Anströmkante erstreckt.

6. Verfahren zur Herstellung einer Schaufel nach einem der Ansprüche 4 oder 5, wobei die Verbindungsschnittstelle (301, 302) einen hervorstehenden Abschnitt umfasst, der an mindestens einer der Hinterkante und der Anströmkante des Schaufelprofils (300) vorhanden ist.

7. Verfahren zur Herstellung einer Turbinenleitschaufel nach einem der Ansprüche 1 bis 3, umfassend die folgenden Schritte:
- Bereitstellen eines ersten Faservorformlings, der dazu bestimmt ist, das Oberseitenteil (110, 210, 310, 410, 510) des Schaufelprofils (100, 200, 300, 400, 500) zu bilden, und eines zweiten Faservorformlings, der dazu bestimmt ist, das Unterseitenteil (120, 220, 320, 420, 520) des Schaufelprofils zu bilden, wobei der erste (510) und der zweite (520) Faservorformling zusammen mindestens einen Plattformvorformling (530) definieren, der dazu bestimmt ist, an einem Längsende des Schaufelprofils (500) vorhanden zu sein, der Plattformvorformling umfassend einen ersten Teil (531), der fest mit dem ersten Faservorformling verbunden ist, und einen zweiten Teil (532), der fest mit dem zweiten Faservorformling verbunden ist;
- Verfestigen des ersten und des zweiten Faservorformlings;
- Halten in Position des ersten und des zweiten verfestigten Faservorformlings in Position mit mindestens einem Auflagebereich auf der Abströmkante (BF) oder der Anströmkante (BA) des Schaufelprofils zwischen den verfestigten Faservorformen; und
- gleichzeitiges Verdichten des ersten und des zweiten verfestigten Faservorformlings, die mit einer gemeinsamen Keramikmatrix in Position gehalten werden, wobei die Bindungsschnittstelle (130, 230, 250, 260, 301, 302, 401) durch die gemeinsame Keramikmatrix an dem Auflagebereich zwischen den Faservorformen gebildet ist, die Verbindungsschnittstelle (401) einen Abdeckungsbereich (402) zwischen dem ersten (410) und dem zweiten (420) verdichteten Faservorformling umfasst, der an mindestens einem Längsende des Schaufelprofils (400) vorhanden ist und dazu bestimmt ist, außerhalb eines Strömungskanals (403) eines Gasstroms der Turbine zu sein, und wobei der erste und der zweite Teil des Plattformvorformlings beim Halten in Position an mindestens einem überlappenden Abschnitt (533, 534), der zu dem Abdeckungsbereich gehört, in Kontakt gebracht werden.

8. Verfahren zur Herstellung einer Schaufel nach Anspruch 7, auch umfassend einen Schritt eines lokalen Aufbringens eines flüchtigen Materials auf den Auflagebereich vor dem gleichzeitigen Verdichtungsschritt, und die Eliminierung des flüchtigen Material, nach dem gleichzeitigen Verdichtungsschritt, sodass mindestens eine Entlüftung (101, 102, 103, 104, 240 bis 249) gebildet wird, die sich zwischen einem Innenraum (V) des Schaufelprofils und einer Außenfläche des Schaufelprofils an mindestens einer der Anströmkante und der Abströmkante erstreckt.

9. Verfahren zur Herstellung einer Schaufel nach einem der Ansprüche 7 oder 8, wobei die Verbindungsschnittstelle (301, 302) einen hervorstehenden Abschnitt umfasst, der an mindestens einer der Abströmkante und der Anströmkante des Schaufelprofils (300) vorhanden ist.

10. Verfahren zur Herstellung einer Schaufel nach einem der Ansprüche 4 bis 9, wobei der erste und der zweite Faservorformling durch dreidimensionales Weben hergestellt werden.

## Claims

1. A turbine stator blade made of ceramic matrix composite material comprising at least one hollow blade profile (100, 200, 300, 400, 500) and having a trailing edge (BF) and a leading edge (BA), the blade also comprises a first portion (110, 210, 310, 410, 510) comprising an extrados face of the blade profile and a second portion (120, 220, 320, 420, 520) distinct from the first portion comprising an intrados face of the blade profile, the first and second portions being connected to one another by a connection interface (130, 230, 250, 260, 301, 302, 401) present at least on the trailing edge or leading edge of the blade profile, the connecting interface comprising a region (402) of overlap between the first (410) and second (420) portions which is present on at least one longitudinal end of the blade profile (400) and intended to be present outside a flow path (403) of a gas stream of the turbine, the blade also comprising at least one platform (530) present at one longitudinal end of the blade profile (500) which comprises a first portion (531) integral with the extrados face (510) of the blade profile and a second portion (532) integral with the intrados face (520) of the blade profile, **characterized in that** the first and second portions of the platform are connected to one another on at least one straddling portion (533, 534) belonging to the region of overlap.

2. The turbine stator blade according to claim 1 comprising at least one vent (101, 102, 103, 104, 240 to 249) on at least one of the trailing edge and the leading edge, said at least vent extending between an internal space (V) of the blade profile and an external surface of the blade profile.

3. The turbine stator blade according to any one of claims 1 or 2, wherein the connection interface (301, 302) comprises a projecting portion present on at least one of the trailing edge and the leading edge of the blade profile (300).

4. A method for manufacturing a turbine stator blade according to one of claims 1 to 3, comprising the following steps:
- providing a first fibrous preform intended to form the extrados face (110, 210, 310, 410, 510) of the blade profile (100, 200, 300, 400, 500) and a second fibrous preform intended to form the intrados face (120, 220, 320, 420, 520) of the blade profile, the first (510) and second (520) fibrous preforms defining together at least one platform preform (530) intended to be present at one longitudinal end of the blade profile (500), the platform preform comprising a first portion (531) integral with the first fibrous preform and a second portion (532) integral with the second fibrous preform;
- densifying the first and second fibrous preforms by a ceramic matrix; and
- assembling the first and second densified fibrous preforms by producing a connection interface (130, 230, 250, 260, 301, 302, 401) present on at least the trailing edge (BF) or leading edge (BA) of the blade profile, the connection interface (401) comprising a region of overlap (402) between the first (410) and second (420) fibrous densified fibrous preforms present on at least one longitudinal end of the blade profile (400) and intended to be present outside a flow path (403) of a gas stream of the turbine, and the first and second portions of the platform preform being connected to one another on at least one straddling portion (533, 534) belonging to the region of overlap.

5. The method for manufacturing a blade according to claim 4 wherein the assembly step comprises the production of at least one vent (101, 102, 103, 104, 240 to 249) extending between an internal space (V) of the blade profile and an external surface of the blade profile, on at least one of the trailing edge and the leading edge.

6. The method for manufacturing a blade according to any one of claims 4 or 5 wherein the connection interface (301, 302) comprises a projecting portion present on at least one of the trailing edge and the leading edge of the blade profile (300).

7. A method for manufacturing a turbine stator blade according to one of claims 1 to 3, comprising the following steps:
- providing a first fibrous preform intended to form the extrados portion (110, 210, 310, 410, 510) of the blade profile (100, 200, 300, 400, 500) and a second fibrous preform intended to form the intrados portion (120, 220, 320, 420, 520) of the blade profile, the first (510) and second (520) fibrous preforms together defining at least one platform preform (530) intended to be present at one longitudinal end of the blade profile (500), the platform preform comprising a first portion (531) integral with the first fibrous preform and a second portion (532) integral with the second fibrous preform;
- consolidating the first and second fibrous preforms;
- holding the first and second consolidated fibrous preforms in position with at least one region for bearing on the trailing edge (BF) or leading edge (BA) of the blade profile between said consolidated fibrous preforms; and
- co-densifying the first and second consolidated fibrous preforms held in position with a common ceramic matrix, the connection interface (130, 230, 250, 260, 301, 302, 401) being formed by the common ceramic matrix on the bearing region between said fibrous preforms, the connecting interface (401) comprising a region (402) of overlap between the first (410) and second (420) densified fibrous preforms which is present on at least one longitudinal end of the blade profile (400) and intended to be outside a flow path (403) of a gas stream of the turbine, and when it is held in position, the first and second portions of the platform preform being contacted on at least one straddling portion (533, 534) belonging to the region of overlap.

8. The method for manufacturing a blade according to claim 7 also comprising a step of locally applying a fugitive material on the bearing region, before the co-densification step, and the removal of the fugitive material, after the co-densification step, so as to form at least one vent (101, 102, 103, 104, 240 to 249) extending between an internal space (V) of the blade profile and an external surface of the blade profile, on at least one of the leading edge and the trailing edge.

9. The method for manufacturing a blade according to any one of claims 7 or 8 wherein the connecting interface (301, 302) comprises a projecting portion present on at least one of the trailing edge and the leading edge of the blade profile (300).

10. The method for manufacturing a blade according to any one of claims 4 to 9 wherein the first and second fibrous preforms are produced by three-dimensional weaving.
